# EUROPÄISCHE PATENTSCHRIFT

(11) **EP 3 593 599 B1**
(45) Veröffentlichungstag und Bekanntmachung des Hinweises auf die Patenterteilung: **22.05.2024**
(21) Anmeldenummer: 18707297.0
(22) Anmeldetag: 15.02.2018
(51) Int. Cl.: H05B 47/155, H05B 47/18, H05B 47/11

(54) **SYNCHRONISIERUNG VON HELLIGKEITSREGLERN**
SYNCHRONISATION OF DIMMER CONTROLS
SYNCHRONISATION DE RÉGULATEURS DE LUMINOSITÉ

(30) Priorität: 06.03.2017 DE 102017203593
(43) Veröffentlichungstag der Anmeldung: 15.01.2020
(73) Patentinhaber: Siemens Schweiz AG, 8047 Zürich (CH)
(72) Erfinder: MÜHLFENZL, Christian, 93055 Regensburg (DE)
(74) Vertreter: Siemens Patent Attorneys
(86) Internationale Anmeldenummer: PCT/EP2018/053742
(87) Internationale Veröffentlichungsnummer: WO 2018/162197

(56) Entgegenhaltungen:
- EP-A1- 2 887 771
- US-A- 4 396 871
- US-A1- 2008 136 334
- US-A1- 2010 301 755
- US-A1- 2011 181 196
- US-A1- 2016 027 262
- US-A1- 2016 073 475
- US-A1- 2016 255 698
- US-B1- 8 058 815

## Beschreibung

Die vorliegende Erfindung betrifft ein Leuchtsystem mit einer ersten Leuchteinrichtung, einer zweiten Leuchteinrichtung, einer ersten Regelungseinrichtung zur Regelung einer Helligkeit der ersten Leuchteinrichtung und einer zweiten Regelungseinrichtung zur Regelung einer Helligkeit der zweiten Leuchteinrichtung. Darüber hinaus betrifft die vorliegende Erfindung ein Verfahren zum Betreiben eines Leuchtsystems mit einer ersten Leuchteinrichtung, einer zweiten Leuchteinrichtung, einer ersten Regelungseinrichtung und einer zweiten Regelungseinrichtung, wobei ein Regeln einer Helligkeit der ersten Leuchteinrichtung durch die erste Regelungseinrichtung und ein Regeln einer Helligkeit der zweiten Leuchteinrichtung durch die zweite Regelungseinrichtung erfolgt.

Häufig wird ein Raum mit einem Leuchtsystem beleuchtet, das mehrere Leuchteinrichtungen umfasst. Dabei ist es günstig, wenn die Helligkeit jeder Leuchteinrichtung geregelt wird, um Energie einzusparen, wenn ausreichend Tageslicht vorhanden ist. Dazu ist ein Sensor notwendig, der die aktuelle Helligkeit aufnimmt, und es ist erforderlich, dass ein Sollwert beispielsweise von einem Nutzer vorgegeben wird. Die Differenz zwischen Istwert und Sollwert nutzt ein Regler, um eine Stellgröße für einen Dimmer der Leuchteinrichtung zu generieren. Grundvoraussetzung für die Helligkeitsregelung ist somit auch, dass die jeweiligen Leuchteinrichtungen dimmbar sind.

Werden nun mehrere Helligkeitsregler einschließlich jeweiliger Sensoren und Leuchteinrichtungen gleichzeitig in einem Raum betrieben, so können sie sich gegenseitig beeinflussen. Insbesondere kann der gleichzeitige Betrieb dazu führen, dass die Helligkeitsregler zum Schwingen anfangen und somit die Helligkeit periodisch stark schwankt. Gegebenenfalls wird auch eine der Leuchteinrichtungen mit maximaler Leuchtkraft betrieben, während eine andere mit sehr geringer Helligkeit betrieben wird oder gar ganz abgeschaltet wird. Dies ist in der Regel jedoch nicht das Verhalten, welches vom User gewünscht wurde.

Bisher versuchte man, die oben geschilderte Problematik dadurch zu umgehen, dass man nur einen einzigen Regler einsetzt. Unterschiedliche Helligkeitswerte innerhalb eines Raumes werden dadurch erreicht, dass die Stellgröße eines Reglers für einzelne Lampen(gruppen) gezielt mit einem Offset beziehungsweise Faktor modifiziert wurde.

Die US 2016/255698 A1 beschreibt eine synchronisierte Lichtsteuerung über ein kabelloses Netzwerk. Für die Lichtsteuerung wird ein Bedienmodul, welches über einen Funksender und -empfänger und mehrere Sensormodule verfügt, zur Steuerung des auf LED-Technik basierenden Beleuchtungsgerätes verwendet.

In der US 8 058 815 B1 wird ein LED Treiber und eine Steuereinheit für einen Treiber beschrieben. Die LED Treiber können schnelle Reaktionszeiten haben, bei denen die LEDs innerhalb von Mikrosekunden nach Erhalt eines Steuersignals leuchten.

Die US 2011/181196 A1 beschreibt einen Dimmer für ein lichtemittierendes Gerät (LED). Der Dimmer beinhaltet einen Schalter, welcher beim Betätigen ein Signal zu einer Spannungsquelle liefert, einen Strommesser, welcher den Strom, der an die LED abgegeben wird bestimmt, und eine Steuereinheit, welche ein Dimmer-Steuerungssignal erzeugt.

In der US 4 396 871 A ist eine Anordnung für eine digitale Helligkeitsregelung von Lampen beschrieben. Die Druckschrift bezieht sich auf eine kontinuierliche Helligkeitssteuerung von Lampen, welche eine mehrphasige Hauptsynchronisationsstufe für die Erzeugung von synchronen Pulsen und einen Steuerungskanal für eine Leistungsstufe enthält.

Die US 2016/027262 beschreibt ein integriertes Hausbeleuchtungs- und Benachrichtigungssystem für eine Lichtvorrichtung, die an die Stromversorgung angeschlossen ist, einer Kamera, einer Auslöseeinrichtung und einer Steuereinheit, die ein Signal über das Netzwerk in Abhängigkeit von der Auslöseeinrichtung überträgt.

Die Druckschrift EP 2 887 771 A1 betrifft eine Sensoranordnung zur Steuerung der Raumbeleuchtung. Die Sensoranordnung umfasst einen Lichtsensor und einen Controller. Der Lichtsensor dient sowohl zur Erfassung einer Umgebungshelligkeit als auch zum Detektieren eines Remote-Signals, welches durch eine Fernbedienungseinheit ausgesandt wird. Das Erfassungssignal wird an einem Sensoranschluss bereitgestellt und zeigt einen Umgebungslichtpegel an sowie das Remote Signal. Der Controller umfasst einen Eingangsanschluss, der mit dem Sensoranschluss verbunden ist und eine Steuereinrichtung zum Erzeugen eines Steuersignals in Abhängigkeit von dem Detektionssignal, um eine Lichtquelle zu steuern.

Die Druckschrift US 2016/0073475 A1 beschreibt einen Kalibrierungsbetrieb einer Beleuchtungsvorrichtung. Eine Kontrolleinheit weist eine Logik zur Anwesenheitserkennung, eine Kalibrierungslogik und einen Eingang zum Empfangen eines Werts eines Lichtsensors auf. Die Anwesenheitslogik dient zum Erfassen eines Anwesenheitsereignisses basierend auf einem Anwesenheitssensor. Die Kalibrationslogik ist ausgelegt, eine Kalibration durchzuführen, welche einen Lichtausgang der Beleuchtungsvorrichtung zwischen einem ersten niedrigen Level und einem zweiten höheren Level ändert. Dabei wird ein Sollwert basierend auf einem Messwert des Lichtsensors geändert. Die Kalibrierungslogik ist ausgelegt, den Kalibrierungsbetrieb als Reaktion auf eine Anwesenheitserkennung auszulösen.

Außerdem beschreibt die Druckschrift US 2008/0136334 A1 ein System zum Steuern einer Beleuchtung. Einzelne Leuchteinheiten werden über Master- und Slave-Module gesteuert.

Die Druckschrift US2010/0301755 A1 offenbart eine Lichtquelle mit Lichtsensor. Ein Steuergerät steuert die Lichtquelle und den Lichtsensor abwechselnd in einem periodischen Zyklus.

Die Aufgabe der vorliegenden Erfindung besteht somit darin, ungewollte Helligkeitsschwankungen in einem Raum, der mit mehreren Leuchteinrichtungen beleuchtet wird, zu vermeiden.

Erfindungsgemäß wird diese Aufgabe durch ein Leuchtsystem und ein Verfahren gemäß den unabhängigen Patentansprüchen gelöst. Vorteilhafte Weiterbildungen der Erfindung ergeben sich aus den Unteransprüchen.

Es wird demnach ein Leuchtsystem mit einer ersten Leuchteinrichtung und einer zweiten Leuchteinrichtung mit mehreren Leuchtmittel bereitgestellt. Natürlich kann die Anzahl der Leuchteinrichtungen beliebig höher als zwei sein. Unter einer Leuchteinrichtung wird hier jedes Mittel verstanden, das geeignet ist, einen Raum zu erleuchten.

Das Leuchtsystem weist ferner eine erste Regelungseinrichtung zur Regelung einer Helligkeit der ersten Leuchteinrichtung und eine Vielzahl von zweiten Regelungseinrichtungen zur Regelung einer Helligkeit der zweiten Leuchteinrichtung auf. Dies bedeutet, dass jede Leuchteinrichtung ihre eigene Regelungseinrichtung besitzt, um die jeweilige Helligkeit individuell zu regeln. Die Regelungseinrichtungen nehmen dabei einen jeweiligen Istwert auf und erzeugen auf der Basis eines vorgegebenen Sollwerts eine Stellgröße für die jeweilige Leuchteinrichtung.

Um nun beispielsweise ein unerwünschtes Schwingen der Regelungseinrichtungen beziehungsweise Leuchteinrichtungen zu vermeiden, werden die Regelungseinrichtungen synchronisiert. Dazu wird das Leuchtsystem mit einer Generatoreinrichtung zum Erzeugen eines Triggersignals (=Synchronisationssignal) ausgestattet oder beispielsweise die erste Regelungseinrichtung als Master und die zweite Regelungseinrichtung als Slave ausgebildet. Sind mehr als zwei Regelungseinrichtungen vorhanden, so werden die weiteren Regelungseinrichtungen jeweils auch als Slave betrieben. Dies bedeutet, dass das gesamte Leuchtsystem eine Generatoreinrichtung bzw. einen Master und viele Slaves umfassen kann. Die Generatoreinrichtung bzw. der Master sorgt für die Synchronisation mit dem Slave beziehungsweise den Slaves. Dazu sind die zweiten Regelungseinrichtungen, d.h. die Slaves, durch die Generatoreinrichtung oder die erste Regelungseinrichtung, d.h. den Master, derart triggerbar, dass die zweiten Regelungseinrichtungen genau dann einen Regelungsberechnungsvorgang starten, wenn die erste Regelungseinrichtung einen Regelungsberechnungsvorgang startet. Dies bedeutet, dass der Master und der Slave beziehungsweise die Slaves, d.h. alle Regelungseinrichtungen, gleichzeitig einen Regelungsberechnungsvorgang starten. Dadurch sind die Regelungseinrichtungen zeitlich synchronisiert. Wenn dem so ist, kommt es nicht mehr zu Schwingungen der Regelungseinrichtungen beziehungsweise Leuchteinrichtungen. Ebenso wenig kann der Fall auftreten, dass eine Leuchteinrichtung voll ausgesteuert wird und die andere Leuchteinrichtung abgeschaltet oder minimal betrieben wird.

Ein PI-Verhalten aller Regelungseinrichtungen ist im Wesentlichen gleich. Alle Regelungseinrichtungen besitzen den gleichen Regelungsalgorithmus.

Generell ist das Regeln des Leuchtsystems überhaupt notwendig, da die Intensität des Tageslichts naturgemäß schwankt. Um dann eine unnötige Beleuchtung zu vermeiden und Energie einzusparen, wird die künstliche Beleuchtung geregelt.

Vorzugsweise sind die Regelungseinrichtungen untereinander vernetzt. Die Vernetzung kann drahtgebunden oder drahtlos sein. Jede Regelungseinrichtung entspricht dann einem Knotenpunkt des Netzes. Gegebenenfalls erfolgt die Vernetzung mittels eines Busses. Gegebenenfalls ist eine bidirektionale Datenkommunikation zwischen den Regelungseinrichtungen möglich.

Jede der Regelungseinrichtungen kann einen separaten Sensor aufweisen, mit dem ein Maß für eine Helligkeit detektierbar ist. Der Sensor dient somit als Istwertgeber bezüglich der Helligkeit für eine Regelungseinrichtung. Eine Regelungseinrichtung und ein zugehöriger Sensor können aneinander angeordnet sein, sie können aber auch räumlich voneinander getrennt sein. Gleiches gilt für das räumliche Verhältnis zwischen der Regelungseinrichtung und der entsprechenden Leuchteinrichtung. Auch sie müssen nicht unmittelbar aneinander angeordnet sein. Beispielsweise kann zur Beleuchtung eines Schreibtisches eine Deckenleuchte verwendet werden. Das Anbringen eines Sensors in unmittelbarer Nähe des Schreibtisches würde für eine Regelung einen optimalen Erfolg bringen. Wenn hingegen der Sensor in unmittelbarer Nähe oder direkt auf dem Schreibtisch stört, kann er auch an der Decke installiert werden und von dort das reflektierte Licht vom Schreibtisch aufnehmen (=indirekte Helligkeitsmessung). In diesem Fall könnten die Leuchteinrichtung, die Regelungseinrichtung und der Sensor unmittelbar aneinander angeordnet sein. Im anderen Fall, dass der Sensor am Schreibtisch platziert ist, kann die Regelungseinrichtung direkt beim Sensor oder bei der Leuchteinrichtung angeordnet sein. Voraussetzung ist lediglich eine jeweilige Kommunikationsmöglichkeit zwischen den einzelnen Komponenten.

Von der Generatoreinrichtung oder dem Master ist zyklisch an den Slave bzw. alle Regelungseinrichtungen ein Triggersignal aussendbar, um die Regelungseinrichtungen bzw. den Master mit dem Slave zu synchronisieren. Somit ist es möglich, den Master mit den Slaves beziehungsweise alle Regelungseinrichtungen untereinander in gewissen zeitlichen Abständen zeitlich aufeinander abzustimmen. Dabei ist es nicht notwendig, dass ein derartiges Triggersignal beim Start jedes Regelungsberechnungsvorgangs übertragen wird. So ist es beispielsweise auch möglich, dass etwa fünf Regelungsvorgänge durchgeführt werden, aber nur beim ersten dieser fünf Regelungsberechnungsvorgänge ein Triggersignal vom Master zu dem Slave oder den Slaves übertragen wird. Erst zum gemeinsamen Start des sechsten Regelungsberechnungsvorgangs in allen Regelungseinrichtungen wird erneut ein Triggersignal vom Master ausgesandt. Die Anzahl fünf ist natürlich nur beispielhaft und kann beliebig variiert werden. Im Extremfall, nicht Teil der Erfindung, wird tatsächlich für jeden Regelungsberechnungsvorgang ein neues Triggersignal übertragen.

Wie bereits angedeutet wurde, kann das Leuchtsystem mehr als zwei Regelungseinrichtungen aufweisen, sodass die Generatoreinrichtung bzw. der Master mindestens zwei Slaves beziehungsweise eine Vielzahl von Slaves, insbesondere alle Slaves, triggert. Dabei kann die Kommunikation zu den einzelnen Slaves durchgängig drahtgebunden oder drahtlos sein. Es sind aber auch Mischformen denkbar. So kann beispielsweise der Master zu einem Slave drahtlos kommunizieren und dieser leitet das Triggersignal drahtgebunden an einen benachbarten Slave weiter. So können beispielsweise Inseln mit Gruppen von Slaves gebildet und angesprochen werden.

In einer speziellen Ausgestaltungsform weist jede der Regelungseinrichtungen einen Konstantlichtregler für Gebäudetechnik auf. Die Regelungseinrichtungen sind also so ausgebildet, dass sie zusammen mit ihren jeweiligen Leuchteinrichtungen für eine konstante Helligkeit in einem Raumbereich sorgen.

Derartige Konstantlichtregler können die einschlägigen Normen beziehungsweise Standards für Gebäudetechnik erfüllen.

Die Zykluszeit des vom Master ausgesandten Triggersignals liegt vorzugsweise zwischen 1 s und 10 min. Diese Zykluszeit des Triggersignals kann der Zykluszeit der Regelungsberechnungsvorgänge entsprechen, sie muss es aber nicht. So kann, ähnlich wie oben bereits dargestellt wurde, beispielsweise alle 10 min ein Triggersignal vom Master zu den Slaves übertragen werden, während die Regelungsberechnungsvorgänge intern in den Regelungseinrichtungen in kürzeren Abständen durchgeführt werden können. Es ist auch nicht notwendig, dass alle Regelungseinrichtungen immer gleichzeitig einen Regelungsberechnungsvorgang durchführen müssen. So kann beispielsweise eine Regelungseinrichtung zwei Regelungsberechnungsvorgänge ausführen, während eine andere Regelungseinrichtung genau synchronisiert beispielsweise mit dem ersten der beiden Regelungsberechnungsvorgänge einen einzigen Regelungsberechnungsvorgang im gleichen Zeitraum durchführt. Die Anzahl der Regelungsberechnungsvorgänge pro Triggerzyklus kann praktisch beliebig gewählt werden. Wesentlich ist lediglich, dass die Regelungsberechnungsvorgänge der einzelnen Regelungseinrichtungen zeitlich aufeinander abgestimmt sind und nicht beliebige Phasen zueinander einnehmen können. In diesem Zusammenhang ist es günstig, dass die Triggersignale mit geringer Häufigkeit übertragen werden, um beispielsweise den Kommunikationsbus beziehungsweise die entsprechende Kommunikationsverbindung möglichst gering zu belasten.

Ein PI-Verhalten aller Regelungseinrichtungen ist im Wesentlichen gleich. Die einzelnen Regelungseinrichtungen beziehungsweise deren Regelungsalgorithmen weisen also allenfalls Schwankungen hinsichtlich ihres Regel-Verhaltens auf, deren Folgen bei der Ausleuchtung eines Raums durch das menschliche Auge kaum sichtbar sind.

Alle Regelungseinrichtungen besitzen den gleichen Regelungsalgorithmus. Dadurch kann gewährleistet werden, dass alle Regelungseinrichtungen synchron agieren und sich nicht gegenseitig negativ beeinflussen können.

Erfindungsgemäß wird die oben genannte Aufgabe auch gelöst durch ein Verfahren nach Anspruch 7.

Die oben im Zusammenhang mit dem Leuchtsystem genannten Variationsmöglichkeiten und Vorteile gelten sinngemäß auch für das erfindungsgemäße Verfahren.

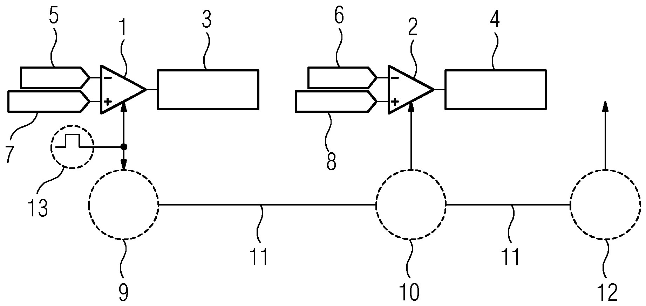

Die vorliegende Erfindung wird nun anhand der beigefügten Zeichnung näher erläutert, die ein Blockschaltbild mehrerer synchronisierter Regler eines Leuchtsystems schematisch darstellt.

Die nachfolgend näher geschildeten Ausführungsbeispiele stellen bevorzugte Ausführungsformen der vorliegenden Erfindung dar.

Ein erfindungsgemäßes Leuchtsystem kann in einem Gebäude, aber auch beispielsweise in einer Außenanlage eingesetzt werden. Es besitzt mehrere Leuchten, die im vorliegenden Dokument auch als Leuchteinrichtungen bezeichnet sind. Mindestens sind zwei Leuchteinrichtungen vorgesehen. Jede Leuchteinrichtung kann ein oder mehrere Leuchtmittel aufweisen.

Jeder der Leuchteinrichtungen ist eine Regelungseinrichtung zugeordnet. Eine jeweilige Regelungseinrichtung kann in dem Gehäuse der Leuchteinrichtung angeordnet sein oder außerhalb des Gehäuses. In jedem Fall besteht eine entsprechende Signalverbindung zwischen der Regelungseinrichtung und der zugehörigen Leuchteinrichtung.

Die Regelungseinrichtungen der Leuchteinrichtungen sind erfindungsgemäß synchronisiert. Dies bedeutet, dass die mindestens zwei Regelungseinrichtungen des Leuchtsystems gleichzeitig jeweils einen Regelungsberechnungsvorgang starten. In der Figur ist ein Beispiel eines Leuchtsystems dargestellt, bei dem die Synchronisation von Regelungseinrichtungen 1, 2 realisiert ist.

Ein erster Regler 1 regelt eine erste Leuchteinrichtung 3 und ein zweiter Regler 2 regelt eine zweite Leuchteinrichtung 4. Jeder Regler 1, 2 erhält als Eingangswerte einen Istwert 5, 6 und einen Sollwert 7, 8. Die Sollwerte 7, 8 werden beispielsweise in dem Regler als feste Vorgaben gespeichert. Die Sollwerte 7, 8 können aber auch einstellbar sein. Die Istwerte 5, 6 stammen von jeweiligen Sensoren. Derartige Sensoren können unmittelbar an der jeweiligen Regelungseinrichtung 1, 2 oder an der zugehörigen Leuchteinrichtung 3, 4 angeordnet sein. Alternativ können die Sensoren auch körperlich von der jeweiligen Regelungseinrichtung 1, 2 beziehungsweise Leuchteinrichtung 3, 4 getrennt sein. Wesentlich ist lediglich, dass eine entsprechende Signalverbindung zur jeweiligen Regelungseinrichtung 1, 2 besteht.

Aus den genannten Eingangsgrößen, d.h. den Istwerten 5, 6 beziehungsweise den Sollwerten 7, 8 erzeugen die jeweiligen Regelungseinrichtungen 1, 2 Stellgrößen, die den zugeordneten Leuchteinrichtungen 3, 4 zugeführt werden. Eine solche Stellgröße kann beispielsweise zum Dimmen der jeweiligen Leuchteinrichtung 3, 4 verwendet werden.

Ziel ist es nun, einen Raum oder eine Fläche in vorgegebener Weise konstant beziehungsweise quasi-konstant (entsprechend einer vorgegebenen Dynamik) zu beleuchten, wobei die einzelnen Leuchteinrichtungen 3, 4 durch die zugehörigen Regelungseinrichtungen 1, 2 in ihrer Helligkeit geregelt werden. Die Leuchteinrichtungen 3, 4 beziehungsweise deren Leuchtmittel sind also entsprechend dimmbar.

Das Beispiel entsprechend der Figur umfasst lediglich zwei Leuchteinrichtungen 3, 4 beziehungsweise entsprechende Regelungseinrichtungen 1, 2. Ein erfindungsgemäßes Leuchtsystem kann aber auch mehr Leuchteinrichtungen und entsprechend mehr Regelungseinrichtungen umfassen. Die jeweilige Anzahl kann bedarfsmäßig gewählt werden.

Würden nun die mehreren Regelungseinrichtungen 1, 2 unsynchronisiert betrieben werden, so kann dies dazu führen, dass sie, obwohl sie mit der gleichen Zykluszeit arbeiten, im Laufe der Zeit phasenverschoben arbeiten. Die Ursache hierfür liegt in den Toleranzen der eingesetzten Oszillatoren in den Geräten.

Der Einsatz der mehreren Leuchteinrichtungen 3, 4 beziehungsweise deren Regelungseinrichtungen 1, 2 in einem Raum führt dazu, dass diese optisch miteinander gekoppelt sind. So beeinflusst nicht nur die erste Leuchteinrichtung 3 den von einem Sensor gelieferten Istwert 5 für die erste Regelungseinrichtung 1, sondern auch die zweite Leuchteinrichtung 4. Umgekehrt beeinflusst sowohl die erste Leuchteinrichtung 3 als auch die zweite Leuchteinrichtung 4 den Istwert 6, den ein Sensor für die zweite Regelungseinrichtung 2 liefert.

Durch die optische Verkopplung der mehreren Regelungseinrichtungen 1, 2 in einem Raum beziehungsweise in einem begrenzten Umfeld kann es durch deren Phasenverschiebung vorkommen, dass eine Helligkeitserhöhung der ersten Leuchteinrichtung 3 (verursacht durch die erste Regelungseinrichtung 1) eine Helligkeitsverringerung der zweiten Leuchteinrichtung 4 (verursacht durch die zweite Regelungseinrichtung 2) hervorruft, oder umgekehrt. Im schlimmsten Fall bedeutet das, dass die jeweiligen Regelungseinrichtungen 1, 2 eine extremwertige Stellgröße liefern (0 % oder 100 %), oder dass ein Schwingen auftritt. Beides ist unerwünscht. Mit einer Synchronisierung der Regelungseinrichtungen aller an der Helligkeit beteiligten Regelungseinrichtungen kann dies vermieden werden.

In der Figur ist eine Möglichkeit dargestellt, die Synchronisation der mehreren Regelungseinrichtungen 1, 2 zu realisieren. Beispielsweise besitzen die Regelungseinrichtungen 1 und 2 jeweils eine Kommunikationsschnittstelle 9, 10. Diese Kommunikationsschnittstellen 9, 10 können über einen Kommunikationsbus 11 miteinander verbunden sein. Bei dem Kommunikationsbus kann es sich beispielhaft um einen KNX-Bus handeln. Es kann sich aber auch um einen anderen Feldbus insbesondere zur Gebäudeautomation, wie etwa den BACnet-Bus, handeln.

In dem Beispiel der Figur ist angedeutet, dass an dem Kommunikationsbus 11 auch weitere Kommunikationsschnittstellen 12 angeschlossen sein können. Insbesondere können an diesen weiteren Kommunikationsschnittstellen 12, von denen exemplarisch nur eine eingezeichnet ist, weitere Regelungseinrichtungen mit Bussignalen versorgt werden.

In den Kommunikationsbus 11 kann nun von einer Generatoreinrichtung 13 ein Triggersignal eingespeist werden. Dieses Triggersignal (z.B. ein Rechteckimpuls) kann über eine Kommunikationsschnittstelle 9, 10, 12 einer jeweiligen Regelungseinrichtung 1, 2 zugeführt werden. Empfängt eine Regelungseinrichtung 1, 2 dieses Triggersignal, so startet sie einen Regelungsberechnungsvorgang. In einer speziellen Ausgestaltung wird die Regelungseinrichtung durch das Triggersignal aufgeweckt und ist nur so lange aktiv, bis der Regelungsberechnungsvorgang wieder abgeschlossen ist.

Die Generatoreinrichtung 13 kann ein separates Gerät sein, das das Triggersignal in den Kommunikationsbus 11 einspeist. Alternativ kann die Generatoreinrichtung 13 an die erste Regelungseinrichtung 1 angegliedert oder in diese integriert sei. Dadurch kommt der ersten Regelungseinrichtung 1 eine Masterfunktionalität hinsichtlich der Auslösung der Regelungsberechnungsvorgänge der einzelnen Regelungseinrichtungen zu. Die zweite Regelungseinrichtung 2 wäre demnach ein Slave, der von dem Master, nämlich der ersten Regelungseinrichtung 1, das Triggersignal erhält. Falls die Generatoreinrichtung 13 ein separates Gerät ist, können sämtliche Regelungseinrichtungen 1, 2 und so weiter jeweils als Slave betrachtet werden.

Die Regelungseinrichtungen sollten alle zumindest ähnliches Verhalten zeigen. Nur so kann die Synchronisation ihre optimale Wirkung entfalten. Insbesondere sollte das PI-Verhalten der einzelnen Regelungseinrichtungen im Wesentlichen gleich sein. Ganz besonders vorteilhaft ist, wenn sämtliche Regelungseinrichtungen den exakt gleichen Regelalgorithmus aufweisen. In diesem Fall wirkt die Synchronisation sämtlicher Regelungseinrichtungen besonders vorteilhaft.

In diesem Zusammenhang ist es auch von Vorteil, wenn die Istwerterfassung möglichst schnell ist. Dies bedeutet, dass die Reaktionszeit der jeweiligen Sensoren möglichst gering sein sollte. Zumindest sollte die Istwerterfassung für sämtliche Regelungseinrichtungen gleich sein. Damit kann wiederum gewährleistet werden, dass sämtliche Regelungsberechnungsvorgänge synchron unter gleichen Bedingungen stattfinden. In einem konkreten Beispiel können sämtliche Regelungseinrichtungen beziehungsweise Helligkeitsregler miteinander vernetzt sein und jeweils den gleichen Regelungsalgorithmus aufweisen. Eine Regelungseinrichtung wird als Master und die restlichen Regelungseinrichtungen jeweils als Slave definiert. Durch die Kopplung ist es möglich, dass der Master zyklisch ein Triggersignal an die Slaves schickt. Sinnvollerweise wird dieses Triggersignal vom Master dann ausgegeben, wenn dieser einen neuen Regelungsberechnungsvorgang startet und dadurch die Slaves synchronisiert.

Regelungseinrichtungen beziehungsweise Konstantlichtregler für die Gebäudetechnik arbeiten meist sehr träge. Die Reaktionszeiten beziehungsweise Zykluszeiten (ein Takt eines Triggersignals) liegen typischerweise zwischen 1 s und mehreren min. Das hat den Vorteil, dass die erforderlichen Triggersignale des Masters den Kommunikationsbus nicht übermäßig belasten und Helligkeitskorrekturen vom Benutzer nur indirekt wahrgenommen werden.

In vorteilhafter Weise ist es durch die oben beschriebenen Ausführungsbeispiele von Leuchtsystemen möglich, dass die einzelnen Regelungseinrichtungen synchronisiert werden. Dies vermindert die Gefahr, dass die Stellgrößen ungewollt in Extremwerte getrieben werden oder Schwingungen vollführen.

### Bezugszeichenliste

- 1: Regler
- 2: Regler
- 3: Leuchteinrichtung
- 4: Leuchteinrichtung
- 5: Istwert
- 6: Istwert
- 7: Sollwert
- 8: Sollwert
- 9: Kommunikationsschnittstelle
- 10: Kommunikationsschnittstelle
- 11: Kommunikationsbus
- 12: Kommunikationsschnittstelle
- 13: Generatoreinrichtung

## Patentansprüche

1. Leuchtsystem aufweisend
- eine erste Leuchteinrichtung (3),
- eine zweite Leuchteinrichtung (4) mit mehreren Leuchtmittel,
- eine erste Regelungseinrichtung (1) zur Regelung einer Helligkeit der ersten Leuchteinrichtung (3) und
- eine zweite Regelungseinrichtung (2) zur Regelung einer Helligkeit der zweiten Leuchteinrichtung (4),
- wobei ein PI-Verhalten aller Regelungseinrichtungen (1, 2) im Wesentlichen gleich ist und alle Regelungseinrichtungen (1, 2) den gleichen Regelungsalgorithmus besitzen,
- wobei das Leuchtsystem weiter aufweist:
• entweder Variante A: eine Generatoreinrichtung (13) zum Erzeugen eines Triggersignals, wobei die erste Regelungseinrichtung (1) und die zweiten Regelungseinrichtungen (2) derart ausgebildet sind, dass sie ausgelöst durch das Triggersignal jeweils gleichzeitig einen Regelungsberechnungsvorgang starten,
• oder Variante B: die erste Regelungseinrichtung (1) als Master zum Erzeugen eines Triggersignals, wobei die erste Regelungseinrichtung (1) als Master und die zweiten Regelungseinrichtungen (2) als Slaves derart ausgebildet sind, dass sie ausgelöst durch das Triggersignal jeweils gleichzeitig einen Regelungsberechnungsvorgang starten,
- wobei das Triggersignal von der Generatoreinrichtung (13) bzw. dem Master zyklisch erzeugbar ist, und
- wobei der Regelungsberechnungsvorgang ein erster von n Regelungsberechnungsvorgängen ist, wobei n eine natürliche Zahl größer oder gleich 2 ist, nur bei dem ersten Regelungsberechnungsvorgang der n Regelungsberechnungsvorgängen das Triggersignal an die jeweiligen Regelungseinrichtungen übermittelt wird, und erst zum gemeinsamen Start des n+1-ten Regelungsberechnungsvorgangs erneut ein Triggersignal an die jeweiligen Regelungseinrichtungen übermittelt wird.

2. Leuchtsystem nach Anspruch 1 Variante A, wobei die Regelungseinrichtungen (1, 2) untereinander mittels eines Kommunikationsnetzes (11) vernetzt sind, über das das Triggersignal von der Generatoreinrichtung (13) zu den Regelungseinrichtungen (1, 2) übertragbar ist.

3. Leuchtsystem nach Anspruch 1 oder 2, wobei jede der Regelungseinrichtungen (1, 2) einen separaten Sensor aufweist, mit dem ein Maß für eine Helligkeit detektierbar ist.

4. Leuchtsystem nach einem der vorhergehenden Ansprüche, das mindestens eine weitere Regelungseinrichtung aufweist, wobei mit dem Triggersignal alle Regelungseinrichtungen synchronisierbar sind.

5. Leuchtsystem nach einem der vorhergehenden Ansprüche, wobei jede der Regelungseinrichtungen (1, 2) jeweils einen Konstantlichtregler für Gebäudetechnik aufweist.

6. Leuchtsystem nach einem der vorhergehenden Ansprüche basierend auf Variante A, wobei eine Zykluszeit des von der Generatoreinrichtung (13) ausgesandten Triggersignals zwischen 1 s und 10 min liegt.

7. Verfahren zum Betreiben eines Leuchtsystems aufweisend eine erste Leuchteinrichtung (3), eine zweite Leuchteinrichtung (4) mit mehreren Leuchtmittel, eine erste Regelungseinrichtung (1) und eine zweite Regelungseinrichtung (2), mit den Schritten
- Regeln einer Helligkeit der ersten Leuchteinrichtung (3) durch die erste Regelungseinrichtung (1) und
- Regeln einer Helligkeit der zweiten Leuchteinrichtung (4) durch die zweite Regelungseinrichtung (2),
- wobei ein PI-Verhalten aller Regelungseinrichtungen (1, 2) im Wesentlichen gleich ist und alle Regelungseinrichtungen (1, 2) den gleichen Regelungsalgorithmus besitzen,
- wobei das Verfahren weiter die Schritte aufweist:
• entweder Variante C: Erzeugen eines Triggersignals durch eine Generatoreinrichtung (13), wobei die erste Regelungseinrichtung (1) und die zweiten Regelungseinrichtungen (2) ausgelöst durch das Triggersignal jeweils gleichzeitig einen Regelungsberechnungsvorgang starten,
• oder Variante D: Erzeugen eines Triggersignals durch die erste Regelungseinrichtung (1) als Master, wobei die erste Regelungseinrichtung (1) und die zweiten Regelungseinrichtungen (2) als Slaves ausgelöst durch das Triggersignal jeweils gleichzeitig einen Regelungsberechnungsvorgang starten,
- wobei das Triggersignal von der Generatoreinrichtung (13) bzw. dem Master zyklisch erzeugt wird, und
- wobei der Regelungsberechnungsvorgang ein erster von n Regelungsberechnungsvorgängen ist, wobei n eine natürliche Zahl größer oder gleich 2 ist, nur bei dem ersten Regelungsberechnungsvorgang der n Regelungsberechnungsvorgängen das Triggersignal an die jeweiligen Regelungseinrichtungen übermittelt wird, und erst zum gemeinsamen Start des n+1-ten Regelungsberechnungsvorgangs erneut ein Triggersignal an die jeweiligen Regelungseinrichtungen übermittelt wird.

## Claims

1. Lighting system having
- a first lighting device (3),
- a second lighting device (4) with several lamps,
- a first control device (1) for controlling a brightness of the first lighting device (3), and
- a second control device (2) for controlling a brightness of the second lighting device (4),
- wherein a PI behaviour of all control devices (1, 2) is substantially identical and all control devices (1, 2) have the same control algorithm,
- wherein the lighting system further has:
• either variant A: a generator apparatus (13) for generating a trigger signal, wherein the first control device (1) and the second control devices (2) are configured such that initiated by the trigger signal they start a control calculation procedure simultaneously in each case,
• or variant B: the first control device (1) as a master for generating a trigger signal, wherein the first control device (1) as a master and the second control devices (2) as slaves are configured such that initiated by the trigger signal they start a control calculation procedure simultaneously in each case,
- wherein the trigger signal is generatable cyclically by the generator apparatus (13) or the master, and
- wherein the control calculation procedure is a first of n control calculation procedures, wherein n is a natural number greater than or equal to 2, the trigger signal is only transmitted to the respective control devices with the first control calculation procedure of the n control calculation procedures, and a trigger signal is retransmitted to the respective control devices only at the joint start of the n+1th control calculation procedure.

2. Lighting system according to claim 1 variant A, wherein the control devices (1, 2) are interlinked with one another by means of a communication network (11), via which the trigger signal is transferrable from the generator apparatus (13) to the control devices (1, 2).

3. Lighting system according to claim 1 or 2, wherein each of the control devices (1, 2) has a separate sensor, with which a measure of a brightness is detectable.

4. Lighting system according to one of the preceding claims, which has at least one further control device, wherein all the control devices are synchronisable with the trigger signal.

5. Lighting system according to one of the preceding claims, wherein each of the control devices (1, 2) has a constant light controller for building services engineering in each case.

6. Lighting system according to one of the preceding claims based on variant A, wherein a cycle time of the trigger signal emitted by the generator apparatus (13) lies between 1 s and 10 min.

7. Method for operating a lighting system having a first lighting device (3), a second lighting device (4) with several lamps, a first control device (1) and a second control device (2), with the following steps
- controlling a brightness of the first lighting device (3) by the first control device (1) and
- controlling a brightness of the second lighting device (4) by the second control device (2),
- wherein a PI behaviour of all control devices (1, 2) is substantially identical and all control devices (1, 2) have the same control algorithm,
- wherein the method further has the steps:
• either variant C: generating a trigger signal by a generator apparatus (13), wherein the first control device (1) and the second control devices (2) initiated by the trigger signal start a control calculation procedure simultaneously in each case,
• or variant D: generating a trigger signal by the first control device (1) as master, wherein the first control device (1) and the second control devices (2) as slaves initiated by the trigger signal start a control calculation procedure simultaneously in each case,
- wherein the trigger signal is generated cyclically by the generator device (13) or the master, and
- wherein the control calculation procedure is a first of n control calculation procedures, wherein n is a natural number greater than or equal to 2, the trigger signal is only transmitted to the respective control devices with the first control calculation procedure of the n control calculation procedures, and a trigger signal is retransmitted to the respective control devices only at the j oint start of the n+lth control calculation procedure.

## Revendications

1. Système d'éclairage, présentant :
- un premier dispositif d'éclairage (3),
- un deuxième dispositif d'éclairage (4) avec plusieurs sources lumineuses,
- un premier dispositif de régulation (1) permettant de réguler une luminosité du premier dispositif d'éclairage (3), et
- un deuxième dispositif de régulation (2) permettant de réguler une luminosité du deuxième dispositif d'éclairage (4),
- dans lequel un comportement proportionnel intégral PI de tous les dispositifs de régulation (1, 2) est essentiellement le même et tous les dispositifs de régulation (1, 2) ont recours au même algorithme de régulation,
- dans lequel le système d'éclairage présente en outre :
• variante A : un dispositif générateur (13) permettant de générer un signal de déclenchement, dans lequel le premier dispositif de régulation (1) et les deuxièmes dispositifs de régulation (2) sont conçus de manière à ce que le signal de déclenchement leur fasse respectivement débuter de manière simultanée une opération de calcul de régulation,
• ou variante B : le premier dispositif de régulation (1) permettant de générer un signal de déclenchement et faisant office de maître, dans lequel le premier dispositif de régulation (1) faisant office de maître et les deuxièmes dispositifs de régulation (2) faisant office d'esclaves sont conçus de manière à ce que le signal de déclenchement leur fasse respectivement débuter de manière simultanée une opération de calcul de régulation,
- dans lequel le signal de déclenchement peut être généré de manière cyclique par le dispositif générateur (13) respectivement le maître, et
- dans lequel l'opération de calcul de régulation est une première parmi n opérations de calcul de régulation, dans lequel n est un nombre naturel supérieur ou égal à 2, le signal de déclenchement n'est transmis aux dispositifs de régulation respectifs que lors de la première opération de calcul de régulation parmi les n opérations de calcul de régulation, et un signal de déclenchement n'est à nouveau transmis aux dispositifs de régulation respectifs qu'au début commun de la n+1^{ème} opération de calcul de régulation.

2. Système d'éclairage selon la revendication 1, variante A, dans lequel les dispositifs de régulation (1, 2) sont mis en réseau les uns avec les autres au moyen d'un réseau de communication (11) par l'intermédiaire duquel le signal de déclenchement peut être transmis depuis le dispositif générateur (13) vers les dispositifs de régulation (1, 2).

3. Système d'éclairage selon la revendication 1 ou 2, dans lequel chacun des dispositifs de régulation (1, 2) présente un capteur séparé avec lequel une mesure de la luminosité peut être détectée.

4. Système d'éclairage selon l'une quelconque des revendications précédentes, qui présente au moins un autre dispositif de régulation, dans lequel tous les dispositifs de régulation peuvent être synchronisés avec le signal de déclenchement.

5. Système d'éclairage selon l'une quelconque des revendications précédentes, dans lequel chacun des dispositifs de régulation (1, 2) présente un régulateur de lumière constante respectif utilisé en technique du bâtiment.

6. Système d'éclairage selon l'une quelconque des revendications précédentes se basant sur la variante A, dans lequel un temps de cycle du signal de déclenchement émis par le dispositif générateur (13) est compris entre 1 s et 10 min.

7. Procédé de fonctionnement d'un système d'éclairage présentant un premier dispositif d'éclairage (3), un deuxième dispositif d'éclairage (4) avec plusieurs sources lumineuses, un premier dispositif de régulation (1) et un deuxième dispositif de régulation (2), comprenant les étapes :
- réguler une luminosité du premier dispositif d'éclairage (3) grâce au premier dispositif de régulation (1), et
- réguler une luminosité du deuxième dispositif d'éclairage (4) grâce au deuxième dispositif de régulation (2),
- dans lequel un comportement proportionnel intégral PI de tous les dispositifs de régulation (1, 2) est essentiellement le même et tous les dispositifs de régulation (1, 2) ont recours au même algorithme de régulation,
- dans lequel le procédé présente en outre les étapes :
• variante C : générer un signal de déclenchement grâce à un dispositif générateur (13), dans lequel le signal de déclenchement amène le premier dispositif de régulation (1) et les deuxièmes dispositifs de régulation (2) à débuter respectivement de manière simultanée une opération de calcul de régulation,
• ou variante D : générer un signal de déclenchement grâce au premier dispositif de régulation (1) faisant office de maître, dans lequel le signal de déclenchement amène le premier dispositif de régulation (1) et les deuxièmes dispositifs de régulation (2) faisant office d'esclaves à débuter respectivement de manière simultanée une opération de calcul de régulation,
- dans lequel le signal de déclenchement est généré de manière cyclique par le dispositif générateur (13) respectivement le maître, et
- dans lequel l'opération de calcul de régulation est une première parmi n opérations de calcul de régulation, dans lequel n est un nombre naturel supérieur ou égal à 2, le signal de déclenchement n'est transmis aux dispositifs de régulation respectifs que lors de la première opération de calcul de régulation parmi les n opérations de calcul de régulation, et un signal de déclenchement n'est à nouveau transmis aux dispositifs de régulation respectifs qu'au début commun de la n+1^{ème} opération de calcul de régulation.
